Europäisches Patentamt

European Patent Office

Office européen des brevets

(11) Veröffentlichungsnummer : **0 092 052 B1**

(12) **EUROPÄISCHE PATENTSCHRIFT**

(45) Veröffentlichungstag der Patentschrift :
02.01.86

(21) Anmeldenummer : **83102577.0**

(22) Anmeldetag : **16.03.83**

(51) Int. Cl.⁴ : **H 02 H   9/06**, H 05 K   9/00

(54) Anordnung zum Schutz von an Leitungen angeschlossenen Geräten vor Über- oder Störspannungen.

(30) Priorität : **20.04.82 DE 3214400**

(43) Veröffentlichungstag der Anmeldung :
**26.10.83 Patentblatt 83/43**

(45) Bekanntmachung des Hinweises auf die Patenterteilung : **02.01.86 Patentblatt 86/01**

(84) Benannte Vertragsstaaten :
**BE CH LI NL**

(56) Entgegenhaltungen :
EP-A- 0 025 853
CH-A-   447 377
DE-A- 2 445 143
DE-A- 3 027 469
FR-A- 1 326 549
FR-A- 1 403 061
FR-A- 2 214 188
FR-A- 2 374 734
GB-A- 1 467 631
GB-A- 2 046 539
GB-A- 2 059 197

(73) Patentinhaber : **ANT Nachrichtentechnik GmbH
Gerberstrasse 33
D-7150 Backnang (DE)**

(72) Erfinder : **Hasse, Peter, Dr.-Ing.
Eberhard-Faber-Strasse 3B
D-8430 Neumarkt/Opf. (DE)**
Erfinder : **König, Raimund
Fischergasse 11 A
D-8430 Neumarkt/Opf. (DE)**
Erfinder : **Zeidler, Manfred
Am Ottenberg 18
D-8431 Pilsach (DE)**
Erfinder : **Pivit, Erich, Dr. Ing.
Akazienhain 14
D-7151 Allmersbach I.T. (DE)**
Erfinder : **Distelrath, Peter, Ing. grad.
Schubartstrasse 7
D-7150 Backnang (DE)**
Erfinder : **Setzer, Helmut, Ing. grad.
J.M. Rösslerstrasse 2
D-7177 Untermünkheim (DE)**

(74) Vertreter : **Schickle, Gerhard, Dipl.-Ing. et al
ANT Nachrichtentechnik GmbH Patent- und Lizenzabteilung Gerberstrasse 33
D-7150 Backnang (DE)**

**Beschreibung**

Die Erfindung betrifft eine Anordnung zum Schutz von an Leitungen angeschlossenen Geräten vor Über- bzw. Störspannungen gemäß Oberbegriff des Patentanspruchs 1.

Solche Anordnungen sind bekannt, beispielsweise aus der DE-A-3 027 469, wo eine Anordnung zum Schutz einer transportablen Fernmeldebetriebsstelle vorgeschlagen wurde. Aufgabe dieser Anordnung war es, bei schneller Auf- bzw. Abbaubarkeit einen erhöhte Schutz gegen Schäden durch Blitzeinschläge zu geben, wobei Erdungsplatten, auf denen das zu schützende Fahrzeug steht, verwendet werden.

Aufgabe der vorliegenden Erfindung ist es, eine Anordnung der eingangs genannten Art anzugeben, bei der ein erhöhter Schutz vor Überspannungen bzw. Störspannungen in unaufwendiger Weise gewährt wird. Die Anordnung soll dabei eine kompakte Bauweise ermöglichen, ohne daß eine hohe Entkopplung eingebüßt wird.

Die Lösung erfolgt mit den im Patentanspruch 1 angegebenen Mitteln.

In der französischen Patentschrift FR-A-1 403 061 ist eine Anordnung elektrischer Bauteile auf einer Druckschaltungskarte beschrieben, wobei ein Masseleiter als zur Leiterpatte parallel geführte, großflächige Metallplatte ausgebildet ist. Die Masseverbindungen können sehr kurz gehalten werden, so daß elektrisch gut entkoppelt wird.

Die Vorteile der erfindungsgemäßen Anordnung liegen darin, daß in kompakter Bauweise ein erhöhter Schutz vor Über- bzw. Störspannungen durch Blitzschlag, EMI (Electromagnetic Interference) — bzw. EMP (Electromagnetic Power)-Einwirkung in unaufwendiger Weise erreicht wird, wobei eine hohe Entkopplung der Signalkreise untereinander einerseits und der zu schützenden Gerätesignaleingänge von den Blitzpfaden andererseits gewährleistet ist.

Vorteilhafte Weiterbildungen der Erfindung sind in den Unteransprüchen gekennzeichnet.

Durch die GB-A-2 059 197 ist eine Anordnung zur Reduzierung von Stoßspannungen bekanntgeworden, wobei ebenfalls ein Tiefpaßfilter aus zwischen Signalader und Masseleiter geschalteten Kondensatoren eingesetzt wird.

Aus der FR-A-2 374 734 ist eine überspannungsschutzschaltung bekannt, die an bestimmten Stellen dünner ausgebildete Leiterbahnen aufweist, welche durch hohe Ströme durchgeschmolzen und aufgetrennt werden.

Es folgt die Beschreibung der Erfindung anhand der Figuren.

Die Fig. 1 zeigt die Schaltungsanordnung für ein Ausführungsbeispiel der erfindungsgemäßen Schutzanordnung.

In Fig. 2 und 2a ist ein Ausführungsbeispiel der Erfindung in der Seitenan- bzw. Draufsicht dargestellt.

Die Fig. 3a, 3b und 3c zeigen zwei Ausführungsbeispiele einer Massekontaktschiene.

In Fig. 4 ist die fotografische Ansicht eines erfindungsgemäßen Einschubes dargestellt.

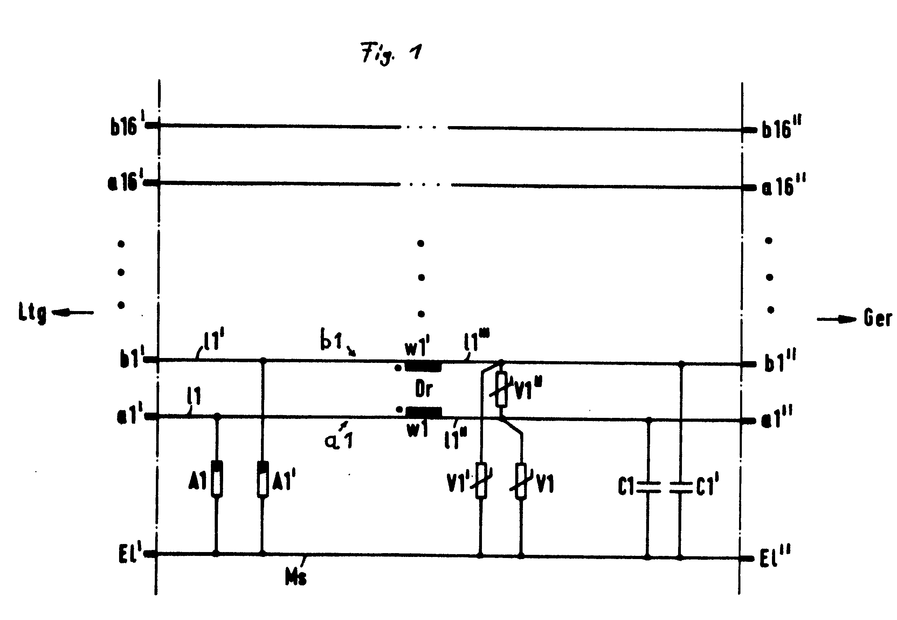

Im Stromlaufplan der Fig. 1 sind die leitungs- und geräteseitigen Anschlüsse (Steckverbinder) a1', b1' bis a16', b16' bzw. a1'', b1'' bis a16'', b16'' für 16 Signaladernpaare sowie der durchgehende Masseleiter Ms zur Verbindung des leitungsseitigen Erdleiters El' mit dem geräteseitigen Erdleiter E'' erkennbar. Ferner sind erkennbar erste Ableiter A1, A1', die Blitzschutzdrossel Dr mit den Wicklungen w1, w1' (die Bauelemente bzw. Bauteile für die Signaladernpaare 2 bis 16 sind nicht gezeichnet), zweite Ableiter V1, V1' sowie die einen Tiefpaß bildenden Kondensatoren C1, C1'. Während die Ableiter A1, A1', V1, V1' und die Kondensatoren C1, C1' jeweils zwischen Signalader a1 oder b1 und Masse geschaltet sind, liegen die Wicklungen w1, w1' der Blitzschutzdrossel seriell im Zuge der Signaladern. Hinter der Blitzschutzdrossel ist ein weiterer zweiter Überspannungsableiter V1'' für den Feinschutz der Geräteeingänge zwischen den beiden Signaladern eines Paares geschaltet. Die zweiten Überspannungsableiter sind bevorzugt Varistoren mit einer kürzeren Ansprechzeit als der der ersten Überspannungsableiter. Die Wicklungen der Blitzschutzdrossel sind so gepolt, daß ein von der Leitungsseite Ltg an der Ader a1 eintreffendes Signal auf dem Wege über die Drossel-Wicklung w1, über Steckverbinder a1'' zum Gerät und von dort wieder über Steckverbinder b1'', zweite Wicklung w1' und weiter über die rückleitende Signalader b1 lediglich die Differenz der Drosselwicklungsinduktivitäten vorfindet, während ein Blitz oder sonstige Stör- bzw. Überspannungen, die gleichzeitig auf den Signaladern a1 und b1 eintreffen, auf jeder Signalader die volle Induktivität einer Drosselwicklung vorfinden.

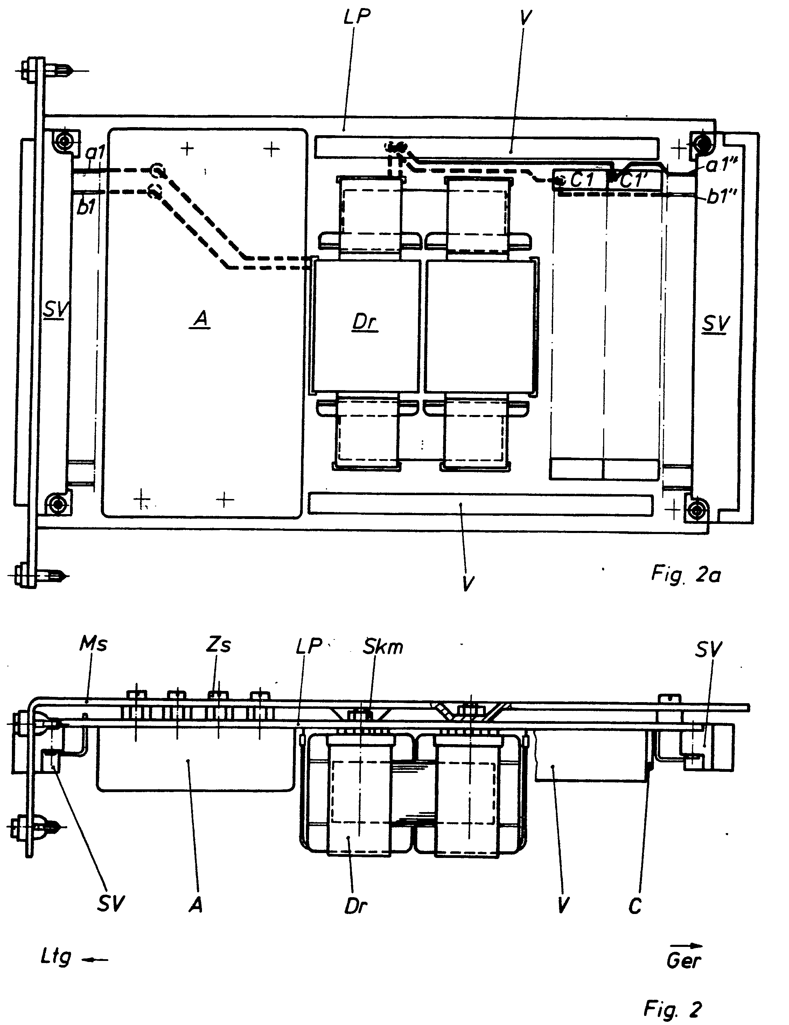

Die Fig. 2 zeigt die Seitenansicht einer Ausgestaltung der Erfindung, eines Steckverbindereinschubes nach Fig. 1. Es ist erkennbar die Leiterplatte LP, die ausgehend von der Leitungsseite Ltg zur Geräteseite Ger von links nach rechts zwischen den Steckverbindern SV in strenger Reihenfolge mit erstem Überspannungsableiter A, daran anschließend mit der Blitzschutzdrossel Dr, dann mit zweiten Ableitern V und schließlich mit Kondensatoren C bestückt ist. Parallel zur Leiterplatte ist in einem kleinen Abstand die Masseplatte Ms geführt. Der Vorteil der Masseplatte liegt darin, daß praktisch an jeder Stelle der Leiterplatte eine niederohmige induktivitätsarme Masseverbindung hergestellt werden kann, indem mit dem entsprechenden gegenüberliegenden Massepunkt kontaktiert wird (z. B. Zylinderschrauben Zs, Sechskantmuttern Skm usw.).

In Figur 2a ist eine Draufsicht auf den Steckverbindereinschub nach Figur 2 gezeichnet, wobei stellvertretend für die übrigen Leiterbahnenzüge der Leiterbahn-Verlauf des ersten Signaladernpaares a1, b1 zwischen den Steckverbindern a1', b1' und a1", b1" durch dicke Striche (durchgezogen sichtbar, strichliert verdeckt) erkennbar ist.

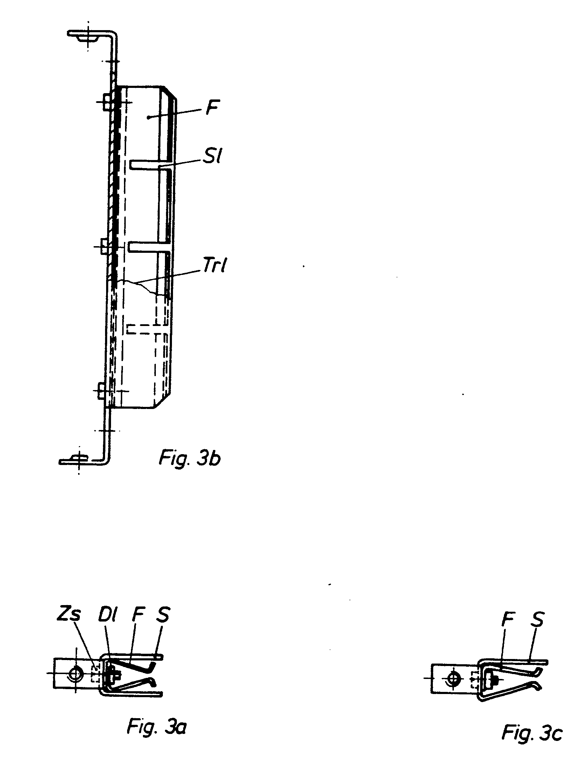

In die Fig. 3a, 3b, 3c schließlich sind Massekontaktschienen dargestellt, mit der eine sehr gute, niederohmige und induktivitätsarme Kontaktierung ermöglicht wird.

In Fig. 3a, die eine solche Massekontaktschiene im Querschnitt darstellt, ist die etwa hufeisenförmig gebogene Kontaktfeder F und die sie umgebende Schutzschiene S erkennbar. Mittels Zylinderschraube Zs und Drucklasche D1 sind Feder und Schiene kraftschlüssig miteinander verbunden. Beim Einschieben der Masseplatte Ms zwischen die beiden Federlaschen der Kontaktfeder F werden letztere auseinander gedrückt und ergeben somit eine gute Kontaktierung.

In der Fig. 3b, die eine Seitenansicht der Kontaktschiene gemäß Fig. 3a zeigt, wobei oberhalb einer Trennlinie Trl die einen Hälften von Schiene S und Feder F weggeschnitten sind, so daß die rechte Kontaktfederhälfte und die rechte Schienenhälfte für den Blick freigegeben sind, sind Schlitze Sl der Kontaktfeder erkennbar. Durch diese Schlitze ist eine Anpassung der Kontaktfeder an örtliche Unebenheiten der Masseschiene und somit eine gute Kontaktierung gewährleistet.

In Fig. 3c ist eine Massekontaktschiene in leicht modifizierter Form dargestellt, wobei die Kontaktfeder F nur eine Lasche aufweist und auf der gegenüberliegenden Seite die Schiene S federlaschenartig ausgebildet ist und wobei die Masseplatte zwischen letzterer Schienenseite und Feder F eingeklemmt wird.

Für den Grobschutz eignen sich vorzüglich Gleitableiter.

Große Vorteile bei der erfindungsgemäßen Anordnung bringt der Einsatz eines Mehrelektrodenvaristors, der neben der Beschaltung der einzelnen Signaladern mit Varistoren gegen Erde auch Varistoren zwischen nebeneinanderliegenden Signaladern vorsieht.

Als Blitzschutzdrossel ist vorteilhafterweise ein Transformator mit Folienwickel eingesetzt, wobei der Folienwickel durch die Parallelführung der einzelnen Signaladern eine hohe Gleichheit an Wicklungsinduktivität und damit eine verschwindend geringe Durchlaßdämpfung für das einzelne Signal sowie eine hohe Entkopplungsdämpfung für die Signale untereinander gewährleistet.

Ein weiterer Vorteil des Folienwickels bei der Blitzschutzdrossel liegt darin daß bei der Bestückung der Leiterplatte ein Vertauschungsgefahr der einzelnen Signaladern so gut wie ausgeschlossen ist.

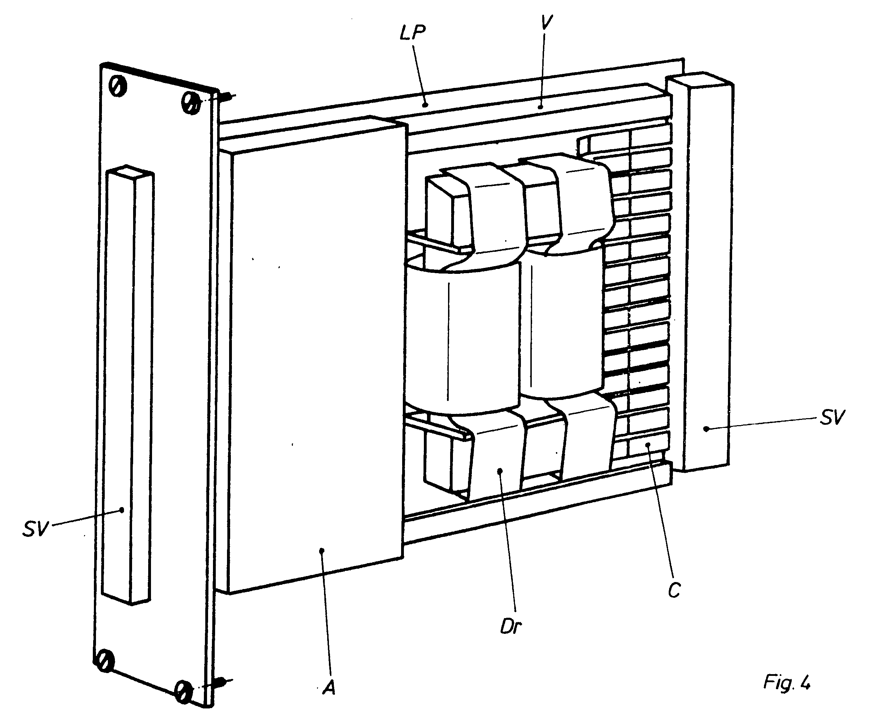

Die Fig. 4 zeigt die fotografische Draufsicht auf einen ähnlich wie in Fig. 2, 2a aufgebauten Verbindungseinschub, wobei die einzelnen Bauteile durch die entsprechenden in gleicher Weise verwendeten Bezeichnungen erkennbar sind.

In einer weiteren optimalen Ausgestaltung hat die Metallplatte gleiche Abmessungen wie die Leiterplatte und weist wie letztere Einschubfunktion auf. Zusätzlich dient die Metallplatte zur Abschirmung benachbarter Bauteile.

## Patentansprüche

1. Anordnung zum Schutz eines durch Adernpaare (a1, b1 ; ...) und einen Masseleiter (Ms) an einer Leitung (Ltg) angeschlossenen Gerätes (Ger) vor Über- oder Störspannungen durch Blitzschlag und EMP-Einwirkung, bestehend aus zwischen der Leitung (Ltg) und dem Gerät (Ger) in die einzelnen Adern (a1, b1 ; ...) in Serie eingefügte Blitzschutzdrosseln (Dr), wobei vor und hinter den Blitzschutzdrosseln jeweils zwischen den einzelnen Adern und dem mit dem Erdleiter (El') der Leitung (Ltg) verbundenen Masseleiter (Ms) erste (A1, A1' ...) bzw. zweite (V1, V1' ...) Überspannungsableiter für den Grob- bzw. Feinschutz geschaltet sind, und wobei hinter den zweiten Überspannungsableitern (V1, V1' ...) ein Netzwerk (C1, C1' ...) mit frequenzabhängigem Übertragungsverhalten eingefügt ist, dadurch gekennzeichnet, daß die Anordnung auf einer Leiterplatte (LP) vorgesehen ist, daß der Masseleiter als zur Leiterplatte (LP) parallel geführte, großflächige Metallplatte (Ms) ausgebildet ist, daß die ersten Überspannungsableiter (A1, A1' ...) blitzstromtragfähig sind und zusammen mit Blitzschutzdrosseln (Dr), zweiten Überspannungsableitern (V1, V1' ...) und Netzwerken (C1, C1' ; ...) mit frequenzabhängigem Verhalten für den Schutz gegen EMI-Einwirkungen mit den sie verbindenden Leiterbahnen jeweils räumlich dicht hintereinander in der genannten Reihenfolge auf der Leiterplatte (LP) angeordnet sind, daß die Blitzschutzdrosseln für zusammengehörige Adern eines einzelnen Paares (a1, b1 ; ...) magnetisch gekoppelte und gleichsinnige Wicklungen (w1, w1' ; ...) aufweisen und daß sämtliche Blitzschutzdrosseln (Dr) zu einem Transformator zusammengefaßt sind, dessen Wicklungen aus Mehrleiter-Folienwickeln bestehen.

2. Anordnung nach Anspruch 1, dadurch gekennzeichnet, daß die Leiterbahnen (l1, l1' ...) zwischen den leitungsseitigen Anschlüssen (a1', b1' ...) der Adern und den nicht erdseitigen Anschlüssen der ersten Überspannungsableiter (A1, A1' ...) sowie die Leiterbahnen (l1", l1''' ...) zwischen den Blitzschutzdrosseln (Dr) und den nicht erdseitigen Anschlüssen der zweiten Überspannungsableiter (V1, V1' ...) jeweils derart ausgebildet sind, daß sie durch hohe Blitzströme durchgeschmolzen und aufgetrennt werden.

3. Anordnung nach Anspruch 2, dadurch gekennzeichnet, daß die derart ausgebildeten Leiterbahnen (l1, l1', l1", l1''') an bestimmten Stellen dünner gestaltet sind.

4. Anordnung nach einem der vorhergehenden Ansprüche, dadurch gekennzeichnet, daß die Leiterplatte (LP) an der Eingangs- bzw. Ausgangsseite mit Steckerstiften bzw. -buchsen zum Anschluß an die Adern (a1', b1' ...) der Leitung (Ltg) bzw. an die Geräteeingänge (a1", b1' ...) des Geräts (Ger) versehen ist.

5. Anordnung nach einem der vorhergehenden Ansprüche, dadurch gekennzeichnet, daß die Metallplatte (Ms) mittels Kontaktschienen mit dem Erdleiter (El') bzw. mit der Gerätemasse (El") verbunden ist.

6. Anordnung nach einem der vorhergehenden Ansprüche, dadurch gekennzeichnet, daß die Netzwerk jeweils einen Tiefpaß aus einem parallel zu den Signaladern (a1, b1 ; ...) und dem Masseleiter (Ms) geschalteten Kondensator (C1, C1') aufweisen.

7. Anordnung nach einem der vorhergehenden Ansprüche, dadurch gekennzeichnet, daß zwischen zusammengehörigen Signaladern (a1, b1 ; ...) hinter den Blitzschutzdrosselwicklungen (w1, w1' ; ...) ein weiterer zweiter Ableiter (V1" ; ...) für den Feinschutz geschaltet ist.

8. Anordnung nach Anspruch 4 und 5 oder nach Anspruch 4 und 5 und einem der Ansprüche 6 oder 7, dadurch gekennzeichnet, daß die Leiterplatte (LP) und/oder Metallplatte (Ms) Einschubfunktion aufweisen.

## Claims

1. Arrangement for the protection of an apparatus (Ger), which is connected through conductor pairs (a1, b1 ; ...) and a ground conductor (Ms) to a line (Ltg), against excess voltages or interference voltages due to lightning stroke or electromagnetic power influence, the arrangement consisting of lightning protection chokes (Dr) inserted in series in the individual conductors (a1, b1 ; ...) between the line (Ltg) and the apparatus (Ger), wherein first (A1, A1' ...) and second (V1, V1' ...) excess voltage arresters respectively for the coarse and the fine protection are connected between the individual conductors and the ground conductor (Ms) connected with the earth conductor (El') of the line (Ltg) each time in front of and behind the lightning protection chokes and wherein a network (C1, C1' ...) with frequency-dependent transmission behaviour is inserted behind the second excess voltage arresters (V1, V1' ...), characterised thereby, that the arrangement is provided on a conductor plate (LP), that the ground conductor is constructed as a large area metal plate (Ms) led parallelly to the conductor plate (LP), that the first excess voltage arresters (A1, A1' ...) are capable of carrying lightning current and are together with lightning protection chokes (Dr), second excess voltage arresters (V1, V1' ...) and networks (C1, C1' ; ...) with frequency-dependent behaviour for the protection against electromagnetic interferences with the conductor tracks connecting them each arranged spatially closely one behind the other in the named sequence on the conductor plate (LP), that the lightning protection chokes for associated conductors of a single pair (a1, b1 ; ...) display magnetically coupled windings (w1, w1' ; ...) of like sense and that all lightning protection chokes (Dr) are combined into one transformer, the windings of which consist of multiconductor film coils.

2. Arrangement according to claim 1, characterised thereby, that the conductor tracks (l1, l1' ...) between the terminals (a1', b1' ...) at the line side of the conductors and the terminals not at the earth side of the first excess voltage arresters (A1, A1' ...) as well as the conductor tracks (l1", l1'") between the lightning protection chokes and the terminals not at the earth side of the second excess voltage arresters (V1, V1' ...) are each constructed in such a manner that they are melted through and severed by high lightning currents.

3. Arrangement according to claim 2, characterised thereby, that the conductor tracks (l1, l1', l1", l1'") constructed in such a manner are structured to be thinner at certain places.

4. Arrangement according to one of the preceding claims, characterised thereby, that the conductor plate (LP) at the input side and at the output side is respectively provided with plug pins and plug bushes for respective connection to the conductors (a1', b1' ...) of the line (Ltg) and to the apparatus inputs (a1", b1" ...) of the apparatus (Ger).

5. Arrangement according to one of the preceding claims, characterised thereby, that the metal plate (Ms) is connected by means of contact rails with the earth conductor (E1') and the apparatus ground (E1") respectively.

6. Arrangement according to one of the preceding claims, characterised thereby, that the networks each display a low pass filter of a capacitor (C1, C1') connected in parallel with the signal conductors (a1, b1 ; ...) and the ground conductor (Ms).

7. Arrangement according to one of the preceding claims, characterised thereby, that a further second arrester (V1" ; ...) for the fine protection is connected between signal conductors (a1, b1 ; ...) belonging together behind the lightning protection choke coils (w1, w1' ; ...).

8. Arrangement according to claim 4 and 5 or according to claim 4 and 5 and one of the claims 6 or 7, characterised thereby, that the conductor plate (LP) and/or metal plate (Ms) display slide-in function.

## Revendications

1. Dispositif destiné à la protection d'un appareil (Ger) relié à une ligne conductrice (Ltg) par des paires de conducteurs (a1, b1, ...) et par un conducteur de masse (Ms), contre les surtensions et les tensions parasites dues à la foudre et aux effets EMP, se composant d'inductances de protection contre la foudre (Dr) montées en série entre la ligne (Ltg) et l'appareil (Ger) dans les différents conducteurs (a1, b1, ...), dans le cas duquel, en amont et en aval des inductances de protection contre la foudre, entre les différents conducteurs et le conducteur de masse (Ms) relié au conducteur de terre (E1') de la ligne (Ltg), il est prévu de premiers (A1, A1', ...) et de seconds (V1, V1', ...) conducteurs d'élimination de surtensions pour la protection contre les hautes et les faibles intensités et dans le cas duquel, en aval des seconds conducteurs d'élimination de surtensions (V1, V1', ...) il est prévu un élément de circuit (C1, C1', ...) à comportement de transmission en fonction de la fréquence, le dispositif étant caractérisé en ce qu'il est prévu sur une carte imprimée ou plaque de conducteurs (LP), en ce que le conducteur de masse est prévu sous la forme d'une plaque de métal de grande surface (Ms) montée parallèlement à la carte imprimée (LP), en ce que les premiers conducteurs d'élimination de surtensions (A1, A1', ...) sont à même de porter le courant de la foudre et, avec des inductances de protection contre la foudre (Dr), de seconds conducteurs d'élimination de surtensions (V1, V1', ...) et des éléments de circuit (C1, C1', ...) à comportement en fonction de la fréquence, pour la protection contre les effets EMI, avec les conducteurs qui les relient, sont prévus l'un derrière l'autre, étroitement rapprochés dans l'espace, dans l'ordre de succession précité, sur la carte imprimée (LP), en ce que les inductances de protection contre la foudre pour les conducteurs correspondants de chaque paire de conducteurs (a1, b1, ...) comportent des enroulements couplés magnétiquement et de même sens (w1, w1', ...) et en ce que toutes les inductances de protection contre la foudre (Dr) sont réunies en un transformateur dont les enroulements sont des enroulements en feuille métallique à plusieurs conducteurs.

2. Dispositif suivant la revendication 1, caractérisé en ce que les conducteurs (I1, I1', ...) entre les connexions côté ligne (a1', b1', ...) des conducteurs et les connexions qui ne sont pas côté terre des premiers conducteurs d'élimination de surtensions (A1, A1', ...), ainsi que les conducteurs (I1'', I1''', ...) entre les inductances de protection contre la foudre (Dr) et les connexions qui ne sont pas côté terre des seconds conducteurs d'élimination de surtensions (V1, V1', ...) sont prévus sous une forme telle qu'ils fondent en certains endroits et se scindent sous l'effet de puissants courants de la foudre.

3. Dispositif suivant la revendication 2, caractérisé en ce que les conducteurs (I1, I1', I1'', I1'''), prévus sous la forme indiquée ci-dessus sont amincis en des endroits déterminés.

4. Dispositif suivant l'une quelconque des revendications précédentes, caractérisé en ce que la carte imprimée (LP) est munie, respectivement au côté d'entrée et au côté de sortie, de fiches de contact et d'alvéoles de contact pour la connexion aux conducteurs (a1', b1', ...) de la ligne (Ltg) et aux entrées (a1'', b1'', ...) de l'appareil (Ger).

5. Dispositif suivant l'une quelconque des revendications précédentes, caractérisé en ce que la plaque de métal (Ms) est reliée par des barres de contact au conducteur de terre (E1') et à la masse (E1'') de l'appareil.

6. Dispositif suivant l'une quelconque des revendications précédentes, caractérisé en ce que les éléments de circuit comportent chacun un passe-bas formé d'un condensateur (C1, C1') monté en parallèle avec les conducteurs de signaux (a1, b1, ...) et le conducteur de masse (Ms).

7. Dispositif suivant l'une quelconque des revendications précédentes, caractérisé en ce qu'entre les conducteurs de signaux correspondants (a1, b1 ; ...), en aval des enroulements d'inductances de protection contre la foudre (w1, w1', ...) il est prévu un autre second conducteur d'élimination (V1'', ...) pour la protection poussée.

8. Dispositif suivant les revendications 4 et 5, ou suivant les revendications 4 et 5 et l'une ou l'autre des revendications 6 et 7, caractérisé en ce que la carte imprimée (LP) et/ou la plaque de métal (Ms) présentent un montage par coulissement.

Fig. 1

Fig. 2a

Ltg ◄—

Ger ➔

Fig. 2

Fig. 3b

Fig. 3a

Fig. 3c

Fig. 4